Europäisches Patentamt

European Patent Office

Office européen des brevets

(19)

(11) Numéro de publication: **0 148 049**
**B1**

(12) **FASCICULE DE BREVET EUROPEEN**

(45) Date de publication du fascicule du brevet: **18.05.88**

(51) Int. Cl.⁴: **H 04 B 9/00,** G 02 B 6/42

(21) Numéro de dépôt: **84402420.8**

(22) Date de dépôt: **27.11.84**

(54) **Canal de transmission optique à connecteurs électriques.**

(30) Priorité: **02.12.83 FR 8319320**

(43) Date de publication de la demande:
**10.07.85 Bulletin 85/28**

(45) Mention de la délivrance du brevet:
**18.05.88 Bulletin 88/20**

(84) Etats contractants désignés:
**BE CH DE GB LI**

(56) Documents cités:
**DE-A-2 258 782**
**US-A-4 291 943**
**US-A-4 307 934**

**ELECTRONICS, vol. 49, no. 18, 2 septembre
1976, pages 94-99, New York, US; H. SCHMID:
"Fiber-optic data transmission: a practical,
low-cost technology"**

**ELECTRONIC DESIGN, vol. 23, no. 14, 5 juillet
1975, pages 30,32, New York, US; J.H. GILDER:
"Fiber-optic communications seen approaching
applications stage"**

(73) Titulaire: **THOMSON-CSF
173, Boulevard Haussmann
F-75379 Paris Cédex 08 (FR)**

(72) Inventeur: **Eumurian, Grégoire
THOMSON-CSF SCPI 173, bld Haussmann
F-75379 Paris Cédex 08 (FR)**
Inventeur: **Courty, Albert
THOMSON-CSF SCPI 173, bld Haussmann
F-75379 Paris Cédex 08 (FR)**

(74) Mandataire: **Trocellier, Roger et al
THOMSON-CSF SCPI 19, avenue de Messine
F-75008 Paris (FR)**

(56) References cited:

**ELECTRONICS LETTERS, vol. 13, no. 6, 17 mars
1977, pages 162,163, Londres, GB; K. ASATANI
et al.: "Nonlinear phase distortion and its
compensation in L.E.D. direct modulation"**

Courier Press, Leamington Spa, England.

## Description

La présente invention se rapporte aux canaux de transmission optique à connecteurs électriques.

On entend par canal de transmission optique l'ensemble formé par un émetteur électro-optique relié par un câble optique à un récepteur opto-électronique. L'émetteur effectue la conversion électrique/optique du signal correspondant à l' information à transmettre, le câble optique achemine le signal lumineux délivré par l'émetteur et le récepteur effectue la transformation inverse optique/électrique du signal lumineux transmis par le câble pour le restituer sous forme électrique. Les conversions respectives sont obtenues par les diodes d'extrémité. L'émetteur utilise en sortie une diode photoémettrice du type diode électroluminescente (DEL en abrégé ou LED de Light Emitting Diode), ou laser. Le récepteur utilise à l'entrée une diode photodétectrice du type diode PIN ou à avalanche (APD en abrégé de Avalanche Photo Diode). Chacune de ces diodes est positionnée avec précision par rapport à la face d'extrémité du câble qui lui est associé pour obtenir un bon couplage optique et une bonne tenue mécanique.

Selon les réalisations conventionnelles les plus fréquentes, le couplage optique en extrémité du câble est réalisé à l'aide de connecteurs optiques appropriés de manière à faciliter les opérations de connexion-déconnexion pour monter, démonter ou changer le câble optique, ou dissocier ce dernier de l'émetteur et/ou du récepteur.

Suivant d'autres réalisations connues, le niveau, de connexion-déconnexion de câble se trouve reporté en amont de la diode émettrice et en aval de la diode réceptrice. Les connecteurs optiques d'extrémités peuvent ainsi être remplacés par des connecteurs électriques permettant de relier les électrodes des diodes d'extrémité au circuit correspondant. On bénéficie alors des avantages de ce type de raccordement en évitant les inconvénients des connecteurs optiques. En effet, la manipulation répétée des connecteurs optiques entraîne une usure mécanique qui provoque rapidement une perte de puissance et une modification de la bande passante du (ou des) conducteur(s) optiques(s) constituant le câble optique (une fibre ou un faisceau de fibres) de la liaison émetteur-récepteur considérée. Par contre, dans le cas de connecteurs électriques, le vieillissement du connecteur est très lent en ne se traduit que par une légère augmentation de la résistance ohmique. Cette augmentation est tellement faible qu'elle n'a pratiquement aucune action sur la fonction de transfert de la liaison. Suivant ces solutions, les extrémités du câble sont terminées par un module incluant la diode d'extrémité couplée optiquement au câble et reliée à un connecteur électrique. Le couplage optique est obtenu par un montage assurant le postionnement mécanique relatif des éléments sans utilisation de connecteurs optiques à proprement parler. Le connecteur électrique est de type coaxial ou multibroches.

Ces réalisations à connecteurs électriques d'extrémité présentent un foctionnement satisfaisant pour autant que la bande de fréquences utilisée reste relativement basse, n'allant pas au delà de quelques MHz pour les fréquences les plus élevées. Au delà, les longueurs des connexions reliant, à travers le connecteur électrique d'extrémité, la diode d'extrémité à son circuit électronique, présentent une influence croissant avec la fréquence et qui modifie la fonction de transfert du système.

Pour remédier à cet inconvénient il est connu, notamment par le brevet US—A—4 307 934 et par la publication ELECTRONICS, volume 49, numéro 18, pages 94—99, H. SCHMID: "Fiber-optic data transmission: a practical, low-cost technology", d'incorporer dans chaque module à la fois, une diode d'extrémité et son circuit correspondant, en sorte que les connexions extérieurs à travers le connecteur électrique n'influent pas sur les caractéristiques de bande passante du canal et permettant le fonctionnement dans une très large bande de fréquences.

Si l'on veut réaliser des systèmes plus performants dont les fréquences hautes atteignent facilement plusieurs centaines de MHz, ou même dépassent le GHz, on constate que chacun des composants, diode ou fibre, présente une influence grandissant sur la réponse de la liaison. A titre d'example, pour une fibre optique de type 50/125 (diamètre du coeur/diamètre de la gaine, en microns) et en considérant des éléments de fibres de même longueur, la fréquence haute transmise peut varier aisément dans la plage 200 MHz à 1,2 GHz en changeant l'élément de câble, soit dans un rapport allant de 1 à 6.

Un object de l'invention est de réaliser un canal de transmission à connecteurs électriques qui remédie aux inconvénients précités de manière à préserver la fonction de transfert constante pour une exploitation dans une très large bande de fréquences tout en permettant une grande souplesse d'exploitation.

Ce but est atteint en mettant en oeuvre un canal de transmission optique du type précité ménageant des possibilités de connexion-déconnexion aisées en extrémités du câble, facilitant les changements éventuels de composants, câble ou diode d'extrémité, selon les nécessités de l'exploitation ou en cas de panne, et dans lequel les circuits sont équipés pour produire une compénsation en fréquence permettant de préserver sensiblement les caractéristiques de la fonction de transfert.

Suivant l'invention, il est proposé de réaliser un canal de transmission optique à connecteurs électriques, composé d'un câble optique reliant un émetteur électro-optique à un récepteur opto-électronique, l'émetteur et le récepteur comportant chacun un circuit électronique associé à une diode transductrice d'extrémité, photoémettrice et photoréceptrice respectivement, le câble étant terminé à chaque extrémité par un module de raccordement électrique, chaque module contenant la diode d'extrémité correspondante avec un dispositif de couplage optique de la diode au câble et le circuit électronique associé, et étant terminé par un connecteur électrique, le canal de transmission étant caractérisé en ce que lesdits circuits électroniques comportent chacun un circuit de compensation en fréquence pour assurer une fonction de transfert constante au canal de transmission et son fonctionnement dans une très large bande de fréquence, chacun des circuits de compensation en fréquence étant constitué par une pluralité d'éléments passifs comportant une impédance pour produire une avance de phase et compenser l'atténuation des hautes fréquences par le câble optique et les couplages optiques d'extrémité, la valeur d'impédance étant fonction de la longeur du câble, l'un des circuits de compensation en fréquence comportant en outre un élément passif ajustable pour ajuster avec précision ladite avance de phase.

Il est connu par le document ELECTRONICS LETTERS, volume 13, numéro 6, pages 162, 163, K. ASATANI et al.: "Non linear phase distortion and its compensation in L.E.D. direct modulation", de réaliser un circuit de compensation de la distorsion de phase différentielle d'une diode photoémettrice, à l'aide d'un circuit de prédistorsion.

Les particularités et avantages de la présente invention apparaîtront dans la description qui suit donnée à titre d'exemple non limitatif à l'aide des figures annexées qui représentent:

Fig. 1, un canal de transmission optique à connecteurs optiques de type connu;

Fig. 2, un canal de transmission optique à connecteurs électriques de type connu;

Fig. 3, un canal de transmission optique à connecteurs électriques conforme à l'invention;

Figs. 4 and 5, des schémes de rappel de modes de couplage optique entre diode d'extrémité et câble optique;

Fig. 6, un canal de transmission multivoies conforme à l'invention;

Fig, 7, une variante de réalisation selon l'invention répondant à des impératifs de passage du câble par des orifices étroits;

Fig. 8, un schéma électrique d'un ensemble émetteur électro-optique avec un circuit de compensation en fréquence, utilisé dans un canal de transmission conforme à l'invention;

Fig. 9, un schéma électrique d'un ensemble récepteur opto-électrique avec un circuit de compensation en fréquence, utilisé dans un canal de transmission conforme à l'invention;

Fig. 10, un exemple de réalisation de module d'extrémité du câble pour un canal de transmission bidirectionnelle selon l'invention.

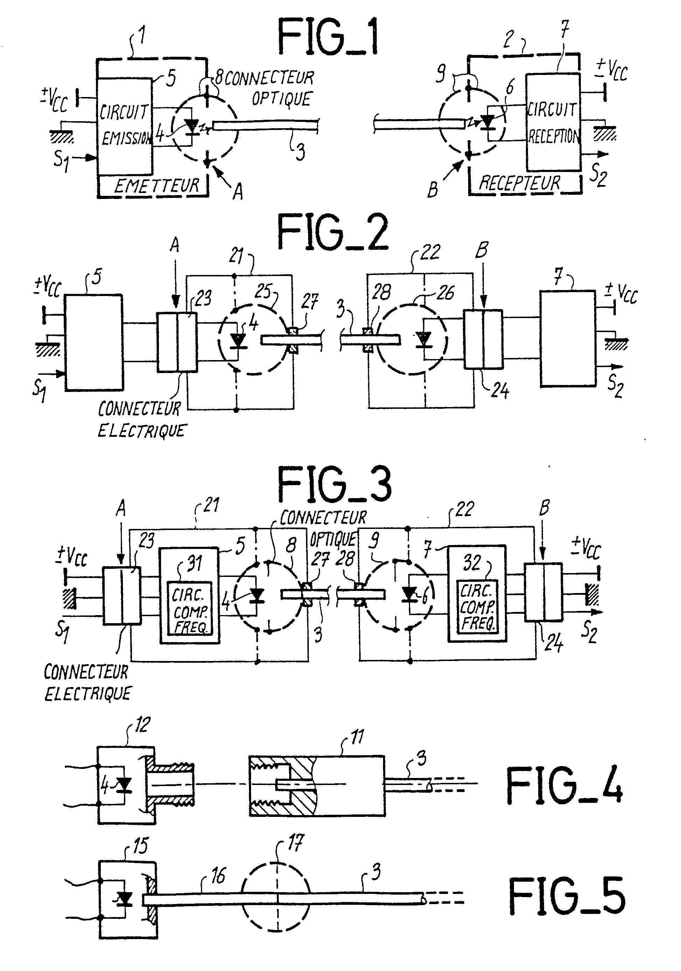

En se reportant à la Fig. 1, le canal de transmission optique se compose d'un ensemble émetteur électro-optique 1 relié à un ensemble récepteur opto-électronique 2 par le câble 3 constitué d'une fibre optique ou d'un faisceau de fibres. L'émetteur l'est constitué par une diode photoémettrice 4 et son circuit associé 5. Le récepteur 2 est constitué de même par une diode photodétectrice 6 et son circuit associé 7. Les extrémités du conducteur optique 3 sont couplées optiquement aux diodes 4 et 6 par un dispositif connecteur optique, 8 et 9 respectivement.

Les liaisons électriques extérieures comprennent les connexions d'alimentation continue (±Vcc et masse) des circuits d'émission et de réception et celles relatives au signal S1 (analogiques ou numérique) à transmettre, et au signal S2 restitué en sortie du récepteur.

Le couplage optique peut s'éffecteur comme représenté sur la Fig. 4 avec un connecteur hybride composé d'une première pièce 11 contenant l'extrémité du câble est adaptée pour être fixée à une deuxième pièce 12 contenant la diode terminale 4 (ou 6). La fixation, par vissage par exemple, place les composantes 4 et 3 (ou 6 et 3) en position.

D'autres modes de couplage sont possibles comme représenté sur la Fig. 5 lorsque la diode 15 est terminée par un fibre optique 16 (dite "pigtail" selon la terminologie anglo-saxonne). On revient ainsi a coupler deux conducteurs optiques 16 et 3. Dans les cas de démontages rares, on peut utiliser la technique d'épissure qui consiste à joindre les extrémités de ces conducteurs optiques par soudure, collage, ou autre moyen. De manière préférée, on utilisera un dispositif connecteur optique 17; il en existe de différentes types pour coupler mécaniquement et optiquement deux conducteurs optiques, monofibre ou multifibres. Pour les besoins de montage selon l'invention, le connecteur 17 doit être de faibles dimensions, miniaturisé.

Pour un canal de transmission utilisant des connecteurs optiques, la fonction de transfert n'est pratiquement jamais constante et varie essentiellement en fonction de l'influence de la température et du viellissement sur les diodes d'extrémité de l'émetteur et du récepteur et sur les connecteurs optiques ainsi que, pour ces derniers de l'état des surfaces optiques et de leur degré de propreté.

Parmi les composants d'extrémité, les diodes DEL d'émission et PIN de réception sont relativement stables. La Puisance optique de la bande passante de la diode DEL d'émission varie modérément en fonction de la température. La diode PIN est pratiquement invariable en fonction de la température. Par contre, les diodes d'émission LASER, qui ont l'avantage d'émettre dix fois plus de puissance que les diodes DEL, varient beaucoup en fonction de la température ainsi que les diodes de réception à avalanche (APD).

Les connecteurs optiques 8 et 9 dans ces liaisons sont utilisés commes des connecteurs classiques pour débrancher (ou rebrancher) en A et B comme indiqué sur la Fig. 1, le câble 3 de l'émetteur 1 ou du récepteur 2.

Ces manipulations des connecteurs optiques entraînement comme il a été dit, une usure mécanique qui provoquent à la fois une perte de puissance et une modification de la bande passante de la fibre (ou du faisceau de fibres) 3. En effet, la réponse en fréquence d'une fibre dépend de l'ouverture numérique (l'ouverture numérique représente le sinus du demi-angle d'injection ou de sortie) d'injection à l'émission et de l'ouverture numérique de réception à la sortie de la fibre. La modification de l'ouverture numérique est due en grande partie à l'élongnement des surfaces optiques à coupler. La diminution de l'ouverture numérique provoque un filtrage modal qui tend à augmenter la bande passante.

La dégradation du connecteur optique se traduit aussi bien par une perte de puissance que par une modification de la bande passante. En outre, le dépôt d'impuretés sur les surfaces optiques provoque également des modifications de la puissance transmise et de l'ouverture numérique; ceci est important, notamment dans le cas de liaisons avec une monofibre de faible diamètre. Pour préserver les caractéristiques de réponse du canal, c'est-à-dire stabiliser la fonction de transfert, il est connu d'utiliser une régulation de température par thermostat de l'enceinte où est placée la diode d'extrémité, ou d'asservir la puissance d'émission en utilisant une photodiode près de la diode émettrice, ou encore d'utiliser un contrôle automatique de gain.

Une autre solution connue rappelée à l'aide de la Fig. 2, consiste à terminer le câble 3 par des modules 21 et 22 contenant les diodes d'extrémité 4 et 6 et pourvus d'un connecteur électrique 23, 24 en extrémité pour le raccordement extérieur aux circuits d'émission 5 et de réception 7, respectivement. Dans le module, un moyen mécanique 25, 26 assure le positionnement correct de la diode en face de l'extrémité du câble et rend solidaire ces éléments du boîtier du module 21, 22. Les niveaux précités A et B de connexion ou déconnexion sont maintenant reportés en amont de la diode émettrice et en aval de la diode réceptrice 6, et sont réalisés avec des connecteurs électriques dont l'usure, comme on l'a dit, n'a pratiquement pas d'influence sur la fonction de transfert. Le moyen mécanique de fixtion et de couplage 25, 26 peut comporter un serre-câble 27, 28 à l'entrée du module.

Conformément à la présente invention, pour accroître les performances et éliminer l'influence sur la bande passante des connexions extérieurs allant des connecteurs électriques 23, 24 aux circuits extérieurs 5 et 7, ces derniers sont intégrés dans le boîtier du module correspondant comme indiqué sur la Fig. 3.

Ainsi, seules subsistent avec l'extérieur des connexions sans effet sur la fonction de transfert, les amenées d'alimentations continues et les signaux 51 et 52, ces connexions aboutissant au connecteur électrique 23 ou 24 correspondant composé d'une prise mâle multibroches et d'une prise femelle correspondante.

En outre, les circuits électriques 5 et 7 sont dotés avantageusement d'un circuit de compensation en fréquence 31, 32 ayant un effet passe-haut de manière à compenser l'atténuation de la fibre, ou un écart éventuel trop important entre la diode et la face d'extrémité au câble à laquelle elile est couplée.

Le couplage entre la fibre optique sortant du serre-câble 27, 28 et le composant d'extrémité 4, 6 est assuré par un montage fixe, ou démontable. Dans la première catégorie entre, en particulier, la raccordement par épissure d'une diode pigtail. Dans la deuxième catégorie entrent les connecteurs optiques 8, 9 diode-fibre (éléments 11—12, Fig. 4), ou fibre-fibre (élément 17, Fig. 5), selon le type de diode. Le couplage par connecteur optique permet d'accéder plus facilement à la diode d'extrémité ou au câble lorsqu'il est nécessaire de changer un élément.

L'existence d'un connecteur optique interne miniature ne présente aucun des inconvénients du connecteur optique externe (Fig. 1). En effet, ce connecteur n'est utilisé que durant la phase d'intégration de l'ensemble et, éventuellement, pour la maintenance. Durant le fonctionnement normal, ce connecteur est toujours verrouillé et ne présente ni risque de vieillisement ni risque de pollution.

L'utilisation d'une jonction optique par épissure interne permet d'obtenir un résultat semblable avec l'avantage d'une plus faible perte de puissance optique mais avec l'inconvénieent d'une démontabilité plus difficile.

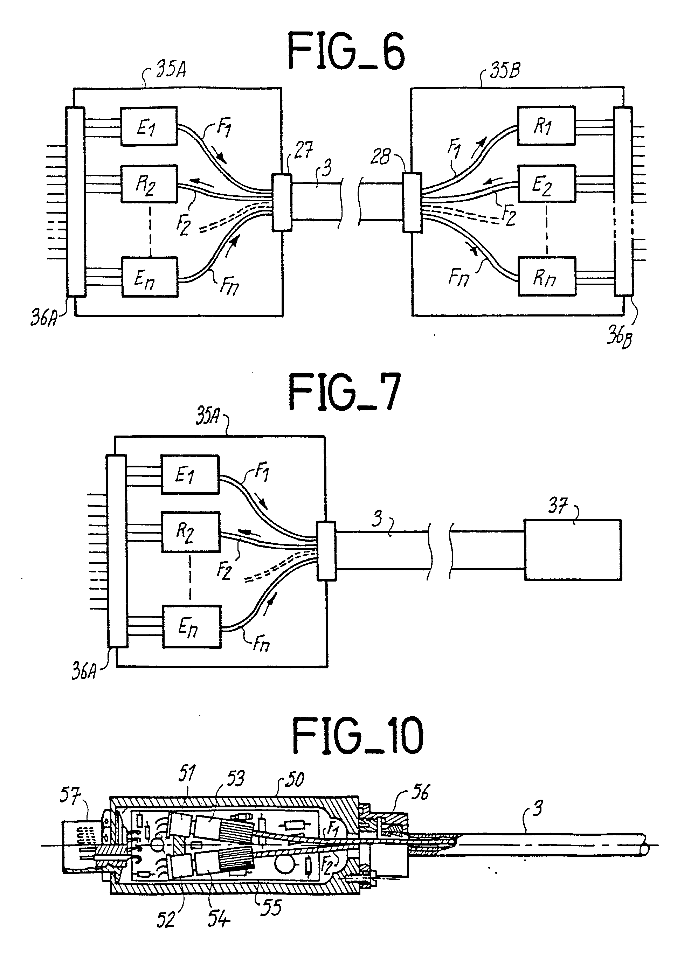

La Fig. 6 se rapporte au cas de canaux multiples c'est-à-dire, comportant plusieurs émetteurs et/ou récepteurs à chaque extrémité. Le câble 3 comporte autant de conducteurs optiques FI à Fn (chacun d'eux étant constitué par une fibre, ou un faisceau de fibres) qu'il y a de liaisons à effectuer, $n$ émetteurs à $n$ récepteurs respectivement. Chacun des blocs El, Rl, ... En, Rn rassemble une diode d'extrémité avec son circuit et le couplage à la fibre F1, ... Fn correspondante. Les modules 35A et 35B sont consécutivement de plus grandes dimensions. Les connexions électriques d'extrémité 36A et 36B rassemblent le brochage de l'ensemble des connexions extérieures pour $n$ circuits internes au module, constitués d'émetteurs et/ou de récepteurs.

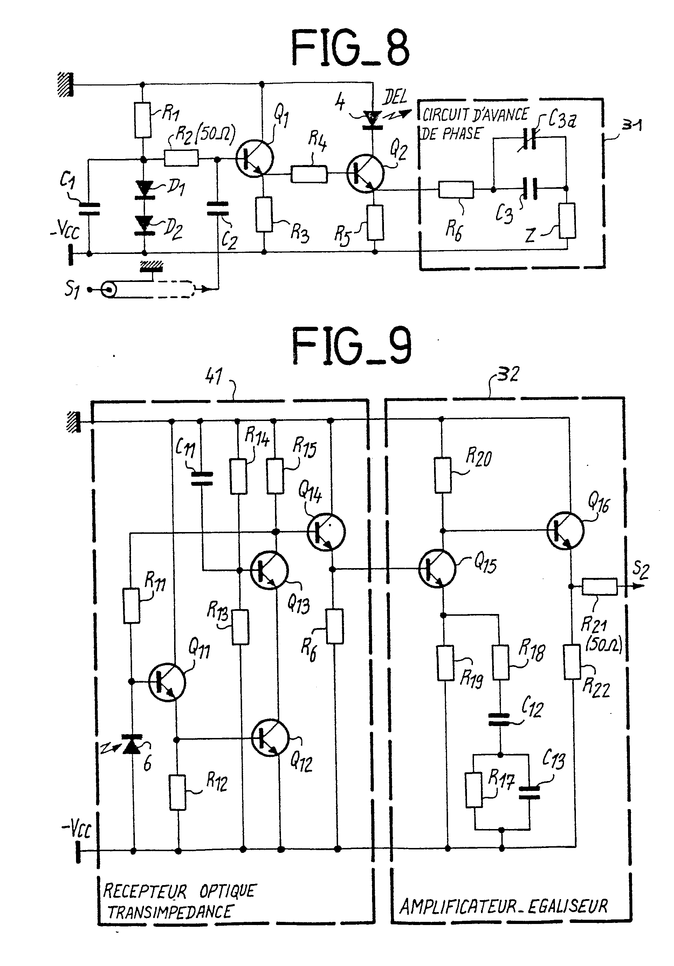

Dans certains cas d'utilisation, il est nécessaire de pouvoir passer la câble optique à travers des orifices de faible diamètre. Dans ce cas, il est possible de monter le ou les ensembles d'émission ou de réception dans un module 21 ou 22 (Fig. 3) ou 35A ou B (Fig. 6) en une extrémité du câble qui peut être connectée et déconnectée souvent, et de terminer l'autre extrémité du câble optique 3 par un connecteur optique 37 monovoie ou mutivoies (Fig. 7), cette deuxième extrémité étant connectée/déconnectée qu'occasionnellement. Cette solution, quoique moins performante que la solution utilisant des connecteurs électriques à chaque extrémité, permet d'obtenir, par la taille moindre du connecteur optique 37 utilisé seul, un diamètre d'orifice de passage de câble très faible.

La Fig. 8 montre un exemple de réalisation du circuit d'émission avec un circuit 31 de compensation en fréquence ou circuit d'avance de phase.

Le transistor Q1 monté en collecteur commun assure l'adaptation d'entrée (impédance d'entrée de 50 ohms, impédance de sortie faible). Les résistance R1 et R3 ainsi que les diodes D1 et D2 assurent une polarisation de ces transistors invariable en température. Le condensateur C1 assure la mise à la masse dynamique de l'une des extrémités de la résistance d'entrée R2 de 50 ohms.

Le deuxième étage, constitué autour du transistor Q2, permet d'effecteur la transformation tension-courant du signal d'entrée. La variation du courant dans la diode 4 est donnée par la variation de tension du signal d'entrée S1 divisée par l'impédance présentée par le circuit formé par la résistance R5 en parallèle avec le circuit de compensation 31. Ce dernier est constitué par la résistance R5, le condensateur C3, et l'impédance Z. Pour un courant de polarisation donné (R5 fixé), le choix de R6, C3, Z permet d'obtenir une avance de phase plus ou moins importante. Afin de faciliter les réglages, un élément ajustable est utilisé, telle une capacité variable C3a montée en parallèle sur C3. L'impédance est fonction de la longeur du câble; à tite indicatif, cette impédance Z est constituée d'une résistance et d'une capacité en parallèle pour un câble de 50 mètres, elle est nulle pour une longueur de 100 mètres et est inductive pour un câble de plus grande longueur 150, 200 mètres ou plus.

La Fig. 9 concerne un mode de réalisation de la partie réceptrice avec également un circuit 32 de compensation en fréquence en aval du circuit de réception 41 proprent dit qui est de type transimpédance.

Ce circuit récepteur 41 comporte un amplificateur à large bande et à gain élevé réalisé autour des transistors Q11 et Q14 assurant l'adaptation d'impédance et Q12 et Q13 formant un montage cascode à faible capacité d'entrée. La résistance R11 produit une contre-réaction. La tension à la sortie du transistor Q14 est sensiblement égale au produit de cette résistance R11 par le courant circulant dans la diode photodétectrice 6.

Le circuit suivant 32 constitue un amplificateur-égaliseur. Il assure la compensation en fréquence vers les fréquences hautes, ou avance de phase, et l'adaptation d'impédance (50 ohms). Il comporte les transistors Q15 et Q16. L'avance de phase est produite par les éléments R17, R18, R19, C12 et C13 et est du même type que celle réalisée au niveau du circuit d'émission.

La Fig. 10 montre une réalisation à l'échelle, environ 70 × 25 × 25mm, d'un module 50 d'extrémité du câble. Dans cet exemple il y a deux diodes d'extrémité 51 et 52 de préférence l'une d'émission et l'autre de réception pour réaliser une transmission bidirectionelle le long du câble équipé de même à l'autre extrémité. On distingue les connecteurs optiques miniatures 53 et 54 qui couplent les diodes aux fibres (ou à des conducteurs multifibres) F1 et F2 respectivement. Les circuits électroniques d'émission et de réception associés aux diodes sont réunis sous forme miniaturisée sur une carte imprimée 55. Les autres éléments sont constitués par un montage serre-câble 56 et du côté oposé le connecteur électrique 57 de type multibroches. En outre, un couvercle non représenté est prévu pour fermer le boîtier du module après montage ou après accès aux éléments pour une opération de maintenance. Des joints d'étanchéité sont avantageusement prévus entre le couvercle et le boîtier et sur les montages d'extrémité 57 et 56.

Les solutions décrites présentent les avantages essentials rappelés ci-après:

contrairement aux connecteurs optiques, très sensibles à l'usure mécanique, à la poussière et autres pollutions, les connecteurs électriques sont pratiquement insensibles et la fonction de transfert du câble optique ne subit pas de modification à chaque connexion-déconnexion;

dans le cas des liaisons multivoies, il est difficile de réaliser des connecteurs optiques multivoies fiables alors que la réalisation de connecteurs électriques multivoies ne pose aucun problème;

la stabilité de la fonction de transfert de la fibre optique due à une ouverture numérique d'entrée constante (par le maintien de la distance~diode-fibre) autorise des compensations, notamment dans le but d'élargir la bande passante, réalisées électriquement. L'extension de la bande passante est réalisée en accentuant les fréquences hautes plus fortement atténuées par la fibre optique. La compensation permet aussi de remédier au filtrage modal dû à un écart trop grand entre diode et fibre;

la standardisation de l'équipement par suite de la compensation de fréquence et les facilités d'exploitation et de maintenance du dispositif présentant une haute fiabilité et de hautes performances. Grâce à l'invention, on remplace un ensemble bien défini et stable par un autre ensemble défini et stable équivalent (on rappelle que le remplacement du câble optique dans les systèmes à connecteurs optiques classiques entraîne une modification qui peut être importante de la fonction de transfert.

**Revendications**

1. Canal de transmission optique à connecteurs électriques, composé d'un câble optique (3) reliant un émetteur électro-optique (1) à un récepteur opto-électronique (2), l'émetteur et le récepteur comportant chacun un circuit électronique (5, 7) associé à une diode transductrice d'extrémité (4, 6), photoémettrice et photoréceptrice respectivement, le câble étant terminé à chaque extrémité par un module (21, 22) de raccordement électrique, chaque module contenant la diode d'extrémité correspondante avec un dispositif de couplage optique (25, 26) de la diode au câble et le circuit électronique associé, et étant terminé par un connecteur électrique (23, 24), le canal de transmission étant caractérisé en ce que lesdits circuits électroniques (5, 7) comportant chacun un circuit de compensation en fréquence (31, 32) pour assurer une fonction de transfert constante au canal de transmission et son fonctionnement dans une très large bande de fréquence, chacun des circuits de compensation en fréquence étant constitué par une pluralité d'éléments passifs (R6—C3—Z, R18—C12—R17—C13) comportant une impédance (Z, R17—C13) pour produire une avance de phase et compenser l'atténuation des hautes fréquences par la câble optique et les couplages optiques d'extrémité, la valeur d'impédance étant fonction de la longueur du câble, l'un des circuits de compensation en fréquence (31, 40) comportant en outre un élément passif ajustable (C3a) pour ajuster avec précision ladite avance de phase.

2. Canal de transmission selon la revendication 1, caractérisé en ce que les dispositifs de couplage optiques internes sont constitués par des connecteurs optiques (8, 9) miniatures.

3. Canal de transmission selon la revendication 2, caractérisé en ce que le connecteur optique interne est de type hydride (11, 12) pour un raccordement diode-fibre, et de type conventionnel (17) pour un raccordement fibre-fibre dans le cas d'une diode d'extrémité du type "pigtail".

4. Canal de transmission selon la revendication 1, caractérisé en ce que les couplages optiques sont réalisés selon une technique d'épissure dans le cas de diodes du type "pigtail".

5. Canal de transmission selon l'une quelconque des revendications précédentes, caractérisé en ce que chaque module comporte au moins deux diodes d'extrémité et leurs circuits associés pour constituer un canal multivoies, le câble (3) comportant $n$ conducteurs optiques (Fl—Fn), monofibre ou multifibres, pour relier chacun un émetteur (Ej) à un récepteur (Rj).

6. Canal de transmission selon la revendication 5, caractérisé en ce que pour réaliser une liaison bidirectionnelle, le câble comporte deux conducteurs optiques (F1, F2) et chaque module un émetteur (51—55) et un récepteur (52—55).

7. Variante de réalisation d'un canal de transmission selon l'une quelconque des revendications précédentes, caractérisé en ce qu'une des extrémités du câble est équipée uniquement d'un connecteur optique (37) miniature pour des questions d'ordre dimensionnelles nécessitées par l'exploitation.

8. Canal de transmission selon l'une quelconque des revendications 1 à 7, caractérisé en ce que chaque circuit de compensation en fréquence (31, 32) comportent lesdits éléments passifs sous forme d'une résistance (R6, R18) en série avec une capacité (C3, C12), suivis du circuit d'impédance (Z, R17—C13), ledit élement ajustable (C3a) étant capacitif et monté en parallèle sur l'une desdites capacités.

9. Canal de transmission selon l'une quelconque des revendications 1 à 8, caractérisé en ce que le circuit d'impédance est constitué par une résistance et une capacité connectées en parallèles (R17—C13) pour des câbles de faible longueur jusqu'à 50m environ, par aucun élément pour des longueurs moyennes d'environ 100m, et par un élément inductif pour des longueurs plus importantes à partir de 150m environ.

10. Canal de transmission selon l'une quelconque des revendications précédentes, utilisant une diode DEL ou laser à l'émission, PIN ou à avalanche à la réception, caractérisé en ce que les liaisons extérieurs aux connecteurs électriques (23, 24) d'extrémité comportent les alimentations continues et le signal numérique ou analogique (S1) à transmettre et celui détecté (S2).

## Patentansprüche

1. Optischer Übertragungskanal mit elektrischen Verbindern, zusammengesetzt aus einem optischen Kabel (3), welches einen elektrooptischen Sender (1) mit einem opto-elektronischen Empfänger (2) verbindet, wobei der Sender und der Empfänger jeweils einen elektronischen Kreis (5, 7) aufweisen, der einer endseitigen Wandlerdiode (4, 6) zugeordnet ist, die Licht aussendet bzw. empfängt, wobei das Kabel an jedem Ende Mit einem Modul (21, 22) für den elektrischen Anschluß abgeschlossen ist und wobei jeder Modul die entsprechende endseitige Diode mit einer Vorrichtung (25, 26) zur optischen Ankopplung der Diode an das Kabel und die zugeordnete elektronische Schaltung enthält und mit einem elektrischen Verbinder (23, 24) abgeschlossen ist, wobei der Übertragungskanal dadurch gekennzeichnet ist, daß die genannten elektronischen Schaltungen (5, 7) jeweils eine Frequenzkompensationsschaltung (31, 32) enthalten, um eine konstante Übertragungsfunktion im Übertragungskanal und seinen Betrieb innerhalb eines sehr weiten Frequenzbandes zu gewährleisten, wobei jede der Frequenzkompensationsschaltungen gebildet ist durch eine Mehrzahl von passiven Elementen (R6—C3—Z, R18—C12—R17—C13), die eine Impedanz (Z, R17—C13) enthalten, um eine Phasenvoreilung hervorzurufen und die Dämpfung der hohen Frequenzen durch das optische Kabel und die endseitigen optischen Kopplungen zu kompensieren, wobei der Impedanzwert eine Funktion der Länge des Kabels ist, wobei eine der Frequenzkompensationsschaltungen (31, 40) ferner ein einstellbares passives Element (C3a) enthält, um die genannte Phasenvoreilung präzise einzustellen.

2. Übertragungskanal nach Anspruch 1, dadurch gekennzeichnet, daß die internen optischen Kopplungsvorrichtungen durch optische Miniaturverbinder (8, 9) gebildet sind.

3. Übertragungskanal nach Anspruch 2, dadurch gekennzeichnet, daß der interne optische Verbinder vom Hybridtyp (11, 12) ist, um einen Diode-Faser-Anschluß herzustellen, und vom herkömmlichen Typ (17) ist, um eine Faser-Faser-Verbindung im Falle einer endseitigen Diode vom Typ "pigtail" herzustellen.

4. Übertragungskanal nach Anspruch 1, dadurch gekennzeichnet, daß die optischen Kopplungen in einer Verspleissungstechnik im Falle von Dioden vom Typ "pigtail" verwirklicht sind.

5. Übertragungskanal nach einem der vorstehenden Ansprüche, dadurch gekennzeichnet, daß jeder Modul wenigstens zwei endseitige Dioden und ihre zugeordneten Schaltungen enthält, um einen Mehrwegkanal zu bilden, wobei das Kabel (3) $n$ optische Leiter (Fl—Fn) in Monofaseroder Multifasserausführung enthält, um jeweils einen Sender (Ej) mit einem Empfänger (Rj) verbinden.

6. Übertragungskanal nach Anspruch 5, dadurch gekennzeichnet, daß zur Verwirklichung einer Bidirektionalen Verbindung das Kabel zwei optische Leiter (F1, F2) umfaßt und jeder Modul einen Sender (51—55) und einen Empfänger (52—55) enthält.

7. Ausführungsvariante eines Übertragungskanals nach einem der vorstehenden Ansprüche, dadurch gekennzeichnet, daß eines der Kabelenden nur mit einem optischen Miniaturverbinder (37) ausgestattet ist, aus Gründen der Dimensionierung, die der Anwendungszweck erfordert.

8. Übertragungskanal nach einem der Ansprüche 1 bis 7, dadurch gekennzeichnet, daß jede Frequenzkompensationsschaltung (31, 32) die genannten passiven Elemente als Widerstand (R6, R18) in Reihe mit einer Kapazität (C3, C12) enthält, gefolgt von einem Impedanzkreis (Z, R17—C13), wobei das einstellbare Element (C3a) kapazitiv ist un mit einer der genannten Kapazitäten parallel geschaltet ist.

9. Übertragungskanal nach einem der Ansprüche 1 bis.8, dadurch gekennzeichnet, daß der Impedanzkreis für Kabel von geringer Länge bis etwa 50m durch einen Widerstand une eine dazu parallel geschaltete Kapazität (R17—C13), für mittlere Längen von etwa 100m durch keinerlei Element und für größere Längen ab etwa 150m durch ein induktives Element gebildet ist.

10. Übertragungskanal nach einem der vorstehenden Ansprüche, unter Verwendung einer DEL- oder Laser-Diode sendeseitig und einer PIN- oder Avalanche-Diode empfangsseitig, dadurch gekennzeichnet, daß die Verbindungen auf der Außenseite der elektrischen endseitigen Verbinder (23, 24) Gleichstromversorgungen und das digitale oder analoge zu Übertragende Signal (S1) und das erfaßte Signal (S2) enthalten.

**Claims**

1. Optical transmission channel with electric connectors, composed of an optical cable (3) connecting an electro-optical transmitter (1) to an opto-electronic receiver (2), the transmitter and receiver each comprising an electronic circuit (5, 7) associated with a converting end diode (4, 6) of light emitting and light receiving type, respectively, the cable being terminated at each end by an electric connection module (21, 22), each module containing the corresponding end diode with an optical coupling device (25, 26) for coupling the diode to the cable and the associated electronic circuit, and being terminated by an electric connector (23, 24), the transmission channel being characterized in that said electronic circuits (5, 7) each comprise a frequency compensation circuit (31, 32) to ensure a constant transfer function at the transmission channel and its operation within a very large frequency band, each frequency compensation circuit being made up by a plurality of passive elements (R6—C3—Z, R18—C12—R17—C13) comprising an impedance (Z, R17—C13) to produce a phase advance and to compensate for the attenuation of high frequencies by the optical cable and the optical end couplings, the impedance value being a function of the cable length, one of said frequency compensation circuits (31, 40) further comprising an adjustable passive element (C3a) to precisely adjust said phase advance.

2. Transmission channel according to claim 1, characterized in that said internal optical coupling devices are made up by optical miniature connectors (8, 9).

3. Transmission channel according to claim 2, characterized in that the internal optical connector is of hybride type (11, 12) for a diode-fiber connection and of conventional type (17) for a fiber-fiber connection in the case of an end diode of "pigtail" type.

4. Transmission channel according to claim 1, characterized in that the optical couplings are embodied according to a splicing technique in the case of diodes of "pigtail" type.

5. Transmission channel according to any of the preceding claims, characterized in that each module comprises at least two end diodes and their associated circuits to form a multipath channel, the cable (3) comprising $n$ optical conductors (Fl—Fn) of monofiber or multifiber type, each for the connection of a transmitter (Ej) to a receiver (Rj).

6. Transmission channel according to claim.5, characterized in that, to provide a bidirectional connection, the cable comprises two optical conductors (F1, F2) and each module comprises a transmitter (51—55) and a receiver (52—55).

7. Modified embodiment of a transmission channel according.to any of the preceding claims, characterized in that one of the ends of the cable is equipped only with an optical miniature connector (37) for reasons of dimensions required by a specific use.

8. Transmission channel according to any of claims 1 to 7, characterized in that each frequency compensation circuit (31, 32) comprises said passive elements in the form of a resistor (R6, R18) in series with a capacity (C3, C12), followed by the impedance circuit (Z, R17—C13), said adjustable element (C3a) being capacitive and mounted in parallel with one of said capacities.

9. Transmission channel according to any of claims 1 to 8, characterized in that the impedance circuit is made up by a resistor and a capacity connected in parallel (R17—C13) for cables of reduced length up to about 50m, by no element at all for intermediate lengths of about 100m, and by an inductive element for greater lengths beginning at about 150m.

10. Transmission channel according to any of the preceding claims, using a DEL or laser diode for transmission and a PIN or avalanche diode for reception, characterized in that the connections outside of the electric end connectors (23, 24) comprise direct supplies and the digital or analog signal (S1) to be transmitted and the detected signal (S2).

FIG_1

FIG_2

FIG_3

FIG_4

FIG_5

# FIG_6

# FIG_7

# FIG_10

# FIG_8

# FIG_9

RECEPTEUR OPTIQUE TRANSIMPEDANCE

AMPLIFICATEUR_EGALISEUR

3